(19) Europäisches Patentamt
European Patent Office
Office européen des brevets

(11) Publication number: **0 447 115 A1**

(12) **EUROPEAN PATENT APPLICATION**

(21) Application number: **91301862.8**

(51) Int. Cl.[5]: **C09D 4/06**, C09J 7/00

(22) Date of filing: **06.03.91**

(30) Priority: **15.03.90 US 493967**

(43) Date of publication of application: **18.09.91 Bulletin 91/38**

(84) Designated Contracting States: **DE FR GB IT SE**

(71) Applicant: **MINNESOTA MINING AND MANUFACTURING COMPANY**
**3M Center, P.O. Box 33427**
**St. Paul, Minnesota 55133-3427 (US)**

(72) Inventor: **Aeling, Ellen O., c/o Minnesota Mining and Manufact. Co., 2501 Hudson Road, P.O. Box 33427**
**St. Paul, Minnesota 55133-3427 (US)**

(74) Representative: **Baillie, Iain Cameron et al**
**c/o Ladas & Parry Isartorplatz 5**
**W-8000 München 2 (DE)**

(54) **Polyvinylether composition.**

(57) Compositions suitable for preparing crosslinked articles and coatings having either high or low tack are described. The compositions comprise vinyl ether having a $T_g$ of 300°K or less, vinyl ether having a $T_g$ of 300°K or higher, optionally a monomeric polyvinyl ether, a base polymer, and a cationic polymerization initiator. Also disclosed is a process for preparing polyvinyl ether coatings, especially pressure sensitive adhesive coatings.

EP 0 447 115 A1

# POLYVINYLETHER COMPOSITION

## Field of the Invention

This invention relates to solventless crosslinkable coating compositions. More particularly, this invention relates to solventless coating compositions that comprise vinyl ethers, a viscosity modifier, and a initiator for cationic polymerization. The invention further relates to substrates bearing an adhesive coating comprising the crosslinked composition and to substrates bearing a protective coating of the crosslinked composition. The invention also relates to the process for the preparation of such coated substrates.

## Description Of The Prior Art

For many years substrates have been coated with compositions comprising vinyl ethers to provide pressure-sensitive adhesive tapes. Generally, an adhesive polymer of the vinyl ether is prepared by polymerization of vinyl ether in a solvent with a cationic initiator such as a alkyl metal halide. The solution of vinyl ether polymer obtained is then coated onto a substrate where the solvent is evaporated (see U.S. Patent Nos. 3,085,997, 3,718,634 and 3,846,384). Adhesives of exceptional strength are claimed for compositions comprising a mixture of a normally tacky vinyl ether polymer, a heat hardenable phenol-aldehyde resin and a normally tacky interpolymer (see U.S. Patent No. 3,280,217). Other blends of polymers of vinyl ethers and a dispersible polymer useful in coatings are also disclosed in U.S. Patent Nos. 3,371,077; 3,431,319; 3,641,204; and 3,645,835.

U.S. Patent No. 3,876,446 discloses a process for the manufacture of poromeric materials wherein there is used an aqueous solution or dispersion of polyethylenically unsaturated monomers and copolymerizable mono-unsaturated monomers that are capable of free-radical copolymerization.

U.S. Patent Nos. 4,058,400; 4,069,056; 4,108,747; 4,150,988; 4,161,405; 4,225,691 disclose processes for the manufacture of thermoplastic polymers and their use in coatings wherein cationically polymerizable material including vinyl ethers are polymerized using aromatic onium salts.

U.S. Patent No. 4,181,752 discloses a method for the preparation of pressure sensitive adhesive by the ultraviolet radiation curing of acrylic monomers. At column 5, lines 42-56 a technique is disclosed for increasing monomer viscosity to a more desirable level by prepolymerizing the monomer mixture, prior to coating until a small degree of polymerization e.g. 5-10%, has taken place, thus forming a syrup. Also disclosed is the teaching that viscosity modifying agents such as high molecular weight polymers can be added to the monomer mixture to increase its viscosity.

U.S. patent No. 4,394,403 discloses a process for the manufacture of adhesives and coatings from cationically polymerizable compounds including alkylvinyl ethers, viscosity modifiers, and an aromatic iodonium salt.

U.S. patent No. 4,654,379 discloses a semi-interpenetrating polymer network utilizable in coatings and printing inks comprising a mixture of a vinyl ether, a cellulose ester, and an onium salt.

Canadian patent No. 1,246,292 discloses photocurable compositions curable to coatings having improved flexibility and impact resistance comprising a linear vinyl ether and a cyclic vinyl ether that is a dihydropyranyl and/or a di-(dihydropyranyl compound). These cyclic vinyl ethers are endocyclic vinyl ethers that contain the structure

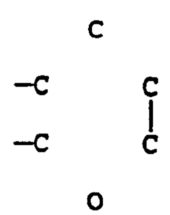

The composition can contain poly (active hydrogen) organic compounds such as the polyether polyols and can contain epoxide.

In none of the art discussed above or in any other art of which Applicants are aware are compositions disclosed comprising a vinyl ether having a $T_g$ below 300°K, a vinyl ether having a $T_g$ above 300°K that is not an endocyclic vinyl ether, a base polymer, and a cationic polymerization initiator.

## Summary Of The Invention

The invention provides coating compositions comprising:

a) a blend of (1) at least one monovinyl ether monomer(s) whose homopolymer has a $T_g$ of 300°K or lower; and (2) at least one monovinyl ether monomer(s) exclusive of endocyclic vinyl ethers, whose homopolymer has a $T_g$ of 300°K or higher;

b) optionally, one or more polyvinyl ether monomer(s);

c) at least one viscosity controlling base polymer; and

d) an initiator of cationic polymerization.

In this application, the following terms are used as defined below.

1. The term "monovinyl ether" means a monomeric organic compound having one ethenyloxy or a propenyloxy group substitution and a molecular weight of 58 to about 400 as described below:

2. The term "polyvinyl ether" means a monomeric organic compound having two or more ethenyloxy or propenyloxy group substitutions and a molecular weight of 70 to about 400 as defined below.

3. The term "exclusive of endocyclic vinyl ethers" means that the vinyl ethers in which the $T_g$ of its homopolymer is 300°K or higher do not include vinyl ethers in which the ether oxygen of the vinyl ether is part of a ring structure but do include exocyclic vinyl ethers in which the ether oxygen of the vinyl ether is outside of any ring structure.

4. The term "effective amount" means an amount of initiator sufficient, under the conditions described, to effect polymerization.

## Detailed Description Of The Invention

The coating compositions of the invention are readily coated onto substrates where polymerization can be brought about without the use of low temperatures or dilute solutions that are conventionally required for the polymerization of vinyl ethers. The polymerization of the composition on the substrate also does not require an inert atmosphere as is required for most acrylate-containing compositions whose polymerization are free radical induced.

Preferably, the coating compositions of the invention comprise

a) about 100 parts of a blend of (1) from about 5 to about 70 percent of at least one monovinyl ether whose homopolymer has a $T_g$ of 300°K or lower, and (2) correspondingly, from about 95 to about 30 percent of at least one monovinyl ether, exclusive of endocyclic vinyl ethers, whose homopolymer has a $T_g$ of 300°K or higher;

b) from 0 to about 40 parts, preferably 0.05 to 15 parts, of at least one polyvinylether; and

c) from about 2 to about 80 parts of at least one viscosity controlling base polymer that is soluble or dispersable in a) and b); and

d) an effective amount of photoinitiator or thermoinitiator of cationic polymerization.

Most preferably, the composition of the invention are pressure-sensitive adhesives having high tack and a $T_g$ of about 245°K. These most preferred compositions comprise:

a) about 100 parts of a blend of (1) from about 35 to about 70 percent of at least one monovinyl ether whose homopolymer has a $T_g$ of 300°K or lower, preferably 265°K or lower and most preferably 250°C or lower and (2) correspondingly from about 65 to about 30 percent at least one monovinyl ether, exclusive of endocyclic vinyl ethers, whose homopolymer has a $T_g$ of 300°K or higher;

b) from 0 to about 40 parts of one or more polyvinyl ethers;

c) from about 2 to about 80 parts of at least one viscosity controlling base polymer that is soluble or dispersable in a) and b); and

d) an effective amount of a photoinitiator or thermoinitiator of cationic polymerization.

For the coatings having high tack, the lower the $T_g$ of the homopolymer of the components 1) in the composition, the greater the amount of components 2) that can be used. Conversely, the higher the $T_g$ of the homopolymer of the component 1) the less the amount of components 2) that can be used.

Monovinyl ethers that can be used in both parts 1) and 2) of component a) of the composition of the invention are saturated or unsaturated aliphatic, aryl, or cycloalkyl vinyl ethers. The vinyl ethers suitable for use in part 1) of the composition have a glass transition temperature, $T_g$ of 300°K or lower, preferably 265°K or lower and most preferably 250°K or lower and those suitable for use in part 2) have a $T_g$ of 300°K or higher, preferably 320°K or higher. Monovinyl ethers that can be used in both of parts 1) and part 2) can be represented by the formula

$$R{-}O{-}\underset{\displaystyle R^1}{\underset{|}{C}} = \underset{\displaystyle R^2}{\underset{|}{CH}} \qquad \text{I}$$

wherein

R is a saturated or unsaturated straight chain, branched chain, or cyclic alkyl group having 1 to 24 carbon atoms, an aryl, aralkyl, or akaryl group having 6 to 24 carbon atoms or a heterocyclic group having at least one ring(s) of 5 or 6 atoms including one or two oxygen atoms, the group optionally being substituted by one or more atoms or groups that do not interfere with the polymerization of the vinyl ether. Examples of such substituting atoms and groups are halogen, i.e., chlorine, bromine, fluorine, cyano, acyloxy, i.e., acetoxy and propionoxy, alkoxy, e.g., methoxy, ethoxy, ethoxyethoxy, and the like;

$R^1$ and $R^2$ are independently hydrogen or methyl or $R^1$ and $R^2$ together is a divalent group having 3 to 12 carbon atoms forming with the carbon atoms to which they are attached an unsaturated 5- or 6- membered ring.

The monovinyl ethers represented by formula I generally have a glass transition temperature, $T_g$, of less than 300°K when R is a linear alkyl group and a $T_g$ of greater than 300°K when R is a cyclic group or when $R^1$ and $R^2$ together form a cyclic group.

In the following, vinyl ethers are named according to the principles and procedures used by Chemical Abstracts. Examples of monovinyl ethers and the $T_g$ of their homopolymer that can be used in part 1) of component a), i.e., those vinyl ethers whose homopolymers have a $T_g$ of 300°K or lower include methoxyethene (commonly called methyl vinyl ether) (242°K), ethenyloxyethene (230°K), 1-ethenyloxypropane (224°K), 2-ethenyloxypropane, 1-ethyenyloxybutane (218°K), 1-ethenyloxy-2-methylpropane (254°K), 1-ethenyloxy-1-methylpropane (253°K), 1-ethenyloxypentane (207°K), 1-ethenyloxyoctane (194°K), and 1-ethenyloxy-2-ethylhexane (207°K).

Other monovinyl ether monomers that should be useful in part 1) of component a) include: 1-methoxy-1-propene, 2-methoxy-1-propene, 2-ethoxy-1-propene (270°K), 3-ethenyloxy-1-propene, 1-ethenyloxy-2-methylbutane, 1-ethenyloxy-3-methylbutane, and 1-(1-methylethenyloxy) butane.

Examples of vinyl ethers whose homopolymer has a $T_g$ of 300°K or higher for use in part 2) of component a) include: 1-ethenyloxy-1,1-dimethylethane (361°K), 1-ethenyloxy-2,2-dimethylpropane (about 424°K), 1-ethenyloxy-2,3-dimethylbutane, and ethenyloxycyclohexane.

Other monovinyl ether monomers that should be useful in part 2) of component b) include: ethenyloxycyclopentane, 1-ethenyloxycyclopentene, 1-ethyloxycyclohexene, ethenyloxymethyl-benzene, 2–(ethenyloxy) ethoxy benzene, and 2-(ethenyloxy) butoxy benzene.

Polyvinyl ethers that can be used in component b) of the composition of the invention can be represented by the formula

$$R^3 \; (O{-}\underset{\displaystyle R^1}{C}H{=}\underset{\displaystyle R^2}{C}H)_x \qquad \text{II}$$

wherein

$R^1$ and $R^2$ are the same as defined in Formula I;

$R^3$ is a polyvalent group having a valence of x that is a saturated or unsaturated straight chain, branched chain, or cyclic group having 1 to 24 carbon atoms, an aryl, aralkyl, or alkaryl group having 6 to 24 carbon atoms or a heterocyclic group containing one or more ring(s) of 5 to 6 atoms including one or two oxygen atoms in the ring(s), $R^3$ being optionally substituted by one or more non-interferring atoms or groups as disclosed for R in Formula I; and

x is an integer having a value of 2 to 5 inclusively.

Examples of polyvinyl ethers that can be used in component b) include 1,2-diethenyloxyethane, 1,3-diethenyloxypropane, 1,4-diethenyloxybutane, 1,3-diethenyloxycyclopentane, 1,4-diethenyloxycyclohexane, 1,4-diethenyloxy-3-oxapentane (diethylene glyclol divinyl ether), 1,8-diethenyloxy-3,6-dioxaoctane, 1,2,3-triethenyloxypropane, 1,1,1-tris(ethenyloxymethyl)propane (trimethylol propane trivinyl ether), tetra(ethenyloxymethyl)methane (pentaerythritol tetravinylether), 1,3-bis(ethenyloxy)benzene,1,4-bis(ethenyloxy)benzene,2,2-bis[4-ethenyloxy)cyclohexyl]propane, 2,2-bis[4-(2-ethenyloxyethoxy)phenyl]propane, and 4,4′-isopropylidene-diphenylexthoxy divinyl ether.

Viscosity controlling base polymers that can be used in component c) are any natural or synthetic polymer or composition that is soluble or dispersable in components a) and b), does not interfere with the cationically initiated polymerization of the vinyl ethers of components a),and b) and which, on addition of a suitable amount

to a) and b), increases the viscosity of the mixture to a viscosity suitable for the coating of a substrate (from about 1200 to 10,000 centipoise). Preferably, the base polymers are linear polymers that can be dissolved or dispersed (i.e. fom a dispersion that does not separate on standing for at least twenty four hours) in a vinyl ether (e.g., ethyloxybutane and 1-ethenyloxy-2-ethylhexane. The base polymer can also be formed by free radically initiated polymerization of one or more ethylenically unsaturated monomers in a vinyl ether, preferably one or more of the vinyl ether components a) and b). Examples of useful ethylenically unsaturated monomers are vinyl esters, e.g., vinyl acetate, vinyl propionate, vinyl butyrate; acrylicesters, e.g. methyl acrylate and methacrylate, ethyl acrylate and methacrylate, butyl acrylate and methacrylate, 2-ethylhexyl acrylate and methanacrylate, n-octyl acrylate and methacrylate, dodecyl acrylate and methacrylate, sec-butyl acrylate and methacrylate; carboxylic acids and anhydrides, i.e., acrylic and methacrylic and, itaconic acid, maleic anhydride, methacrylamide, N-methylacrylamide, N-butylacrylamide, N-methylmethacrylamide; N-butylmethacrylamide; olefins, e.g., 1-butylene, isoutylene, isoprene, styrene, -methylstyrene; N-vinyl heterocyclics, and the like.

Examples of base polymers that can be dissolved or dispersed in components a) and b), or formed by polymerization of free radically polymerizable monomers in a vinyl ether include: poly(vinyl esters), e.g., poly (vinyl acetate), poly(vinyl formate), poly(vinyl benzoate); poly ethylenically unsaturated hydrocarbons, e.g, polyisobutylene, polystyrene, poly(α-methylstyrene), poly(4-chlorostyrene); polyacrylates, e.g., poly(methyl acrylate), poly(ethylacrylate), poly(butyl acrylate), poly(2-ethylhexyl acrylate, poly (sec-butyl acrylate), poly(t-butyl acrylate), polymethacrylates, e.g., poly (methyl methacrylate, poly (dodecyl methacrylate), poly(2-ethylhexyl methacrylate), poly(butyl methacrylate), poly(sec-butyl methacrylate), poly(cyclohexyl methacrylate) poly(methyl chloroacrylate); polyacrylamides, e.g., poly(N-methylacrylamide), poly(N-butylacrylamide), poly(N-butylmethacrylamide); polyesters, e.g., poly(oxyethyleneoxyadipoyl) poly[di(oxyethylene)oxyadipoyl], poly(oxyethyleneoxyglutaryl), poly(oxyethyleneoxyterphtaloyl), poly(oxytetramethylene oxyadipoyl); polyacetals, e.g., poly (1,3-dioxa-2-propyl-4,6-cyclohexylenemethylene); cellulosics, e.g. cellulose triacetate, cellulose acetate butyrate, ethyl cellulose; and polyurethanes, e.g., poly (oxytetramethyleneoxycarbonyliminohexamethyleneiminocarbonyl), poly(oxyhexamethyleneoxycarbonylimino-4-methyl-1,3-phenyleiminocarbonyl.

Particularly desirable viscosity controlling base polymers are the copolymers of two or more ethylenically unsaturated monomers such as styrene-butadiene rubber butadiene-acrylonitrile rubber styrene-acrylonitrile rubber, styrene-isoprene rubber and acrylic copolymers such as, isooctyl acrylate-co-acrylic acid and ethylene-co-vinyl acetate.

Initiators of cationic polymerization that are employed in component d) of the composition of the invention are known in the art and are selected from thermoinitiators and photoinitiators. Useful amounts range from about 0.02 to about 5 percent by weight based on the total weight of a) and b).

Examples of thermoinitiators that can be used are Lewis acids such as aluminum chloride, aluminum bromide, boron trifluoride, antimony pentafluoride, phosphorous pentafluoride, titanium tetrafluoride and the like. Other thermoinitiators that can be used are protic acids such as $HSbF_6$, $HAsF_6$, $HBF_4$, $H_2SO_4$, $H_3PO_4$ and the like.

Examples of photoinitiators that can be used include organo-ionic salts whose anions are comprised of complex halogenated metals or metalloids. Especially preferred are the onion ionic salts.

The preferred onium photoinitiators are adducts of an aromatic organoatomic cation of a Periodic Group VA, VIA, or VIIA atom, recently given the notation of Groups 15, 16, and 17 in Chem. & Eng. News, Vol. 63, No. 5, 26 (Feb. 4, 1985), particularly the phosphorous, antimony, sulfur, nitrogen, and iodine atoms, and an anion. The term "aromatic", as used in the description of the groups on the initiators of the present invention means an aromatic ring which can be a hydrocarbon or a 5-, or 6- or 7-membered heterocyle having ring atoms comprised of carbon and one or more atoms selected from S, O, or Si atoms. Representative aromatic rings are phenyl, naphthyl, thienyl, pyranyl, furanyl, and pyrazoyl, either substituted or unsubstituted. For purposes of convenience in desribing these onium initiators, the Group VA, VIA, or VIIA atom that provides the major nomenclature for the adduct (e.g., phosphous in phosphonium, sulfur in sulfonium, iodine, in iodonium, et.c) will be called the nominative atom.

A descriptive formula for the preferred onium initiators (ionic salts of the onium type) useful in the present invention is

$$\begin{matrix}(R^4)_n & A^+ & X^- \\ & (R^5)_a & \end{matrix} \qquad III$$

wherein

$R^4$ is an aromatic group,

$R^5$ is an aromatic group that is the same as or is different from $R^4$ or is a straight chain, branched, or cyclic alkyl or alkenyl group having 1 to 18 carbon atoms;

A is an atom of the periodic group VA, VIA, or VIIA;

n is a positive whole integer, i.e. from one up to the valence of A plus one;

a is zero or a positive whole integer of up to the valence of A (preferably A minus 1); provided that the sum of n plus a is equal to the valence of A plus one; and

X is a halogen containing complex anion of a metal or metalloid.

These onium salts are known in the art. For example, U.S. Patent Nos. 4,026,705, 4,032,673, 4,069,056, 4,136,102 and 4,173,476, all of which are incorporated herein by reference, show the use of certain onium compounds as cationic polymerization initiators for specific monomers such as organosilicon cyclics, vinyl resins, cyclicethers, cyclicesters, cyclic sulfides, epoxy resins, phenolic resins, polyamines, lactones, styrene, urea/formaldehyde and melamine/formaldehyde resins.

As shown in Formula III, there are at least two organic groups attached to the Group VA, VIA or VIIA nominative atom. At least one of these organic groups must be aromatic and the other organic groups can be the same aromatic group or a substituted or unsubstituted alkyl, alkoxy, cycloalkyl, alkenyl, or cycloalkenyl group. The organo groups may also be directly attached to one another via a bond, a methylene group, a

$$\overset{O}{\underset{}{-C-}}$$

group, an $-SO_2-$ group, an oxygen, or sulfur atom or the like. One or more of the organo groups can share two atoms in a condensed ring system.

Examples of suitable onium salts include, but are not limited to:

A. onium salts having as nominative atom a periodic group VA cation: diphenylmethylammonium tetrafluoroborate, tetraphenylphosphonium hexafluorophosphate, (4-bromophenyl)triphenylphosphonium hexafluorophosphate, tetraphenylarsonium tetrafluoroborate, tetraphenylbisammonium hexafluorophosphate, di(1-naphthyl)dimethylammonium tetrafluorborate, tri-(3-thienyl)methylammonium tetrafluoroborate, and diphenacyldimethylammonium hexafluorophosphate.

Examples of these and other onium salts and their preparation are disclosed in Belgian Patent No. 828,668.

B. onium salts having as nominative atom a periodic group via cation: triphenylsulfonium hexafluoroantimonate, 4-chlorophenyldiphenylsulfonium tetrafluoroborate, 4-chlorophenyldiphenylsulfonium tetrafluoroborate, 4-cyanophenyldiphenylsulfonium hexafluorophosphate, triphenyltelluronium pentachlorobismuthate, and triphenylselenonium hexafluoroantimonate.

Examples of these and other onium salts having as nominative atom a Periodic Group VIA cation and their preparation are given in Belgian Pat. Nos. 828,670 and 833,472 and U.S. Patent No. 4,256,825.

C. onium salts having as nominative atom a periodic group VIIA cation: diphenyliodonium hexafluorophosphate, 4-chlorophenylphenyliodonium hexafluoroantimonate, diphenyliodonium hexafluoroarsonate, 4-trifluoromethylphenylphenyliodonium tetrafluoroborate, di(4-methoxyphenyl)iondonium hexafluoroarsonate, 4-methylphenylphenyliodonium tetrafluoroborate, diphenylbromonium hexafluorophosphate, and 2,2'-diphenyliodonium hexafluorophosphate.

Examples of these and other halonium salts and their preparation are disclosed in Belgian Pat. No. 828,669 and U.S. Patent No. 4,256,828.

The photoinitiator ionic salts having an organometallic complex cation and a halogen containing complex anion of a metal or metalloid are salts in which the cation is capable of adding an intermediate strength nucleophile (example of such a nucleophile is triphenylphosphine) or upon photolysis is capable of liberating at least one coordination site, the metal of the organometallic complex cation being selected from elements of Periodic Groups IVB, VB, VIB, VIIB, and VIIIB, recently given the notation of Groups 4, 5, 6, 7, 8, 9, and 10 by Chem. & Eng. News, supra. Examples of such ionic salts and their preparation are disclosed in assignee's copending patent application U.S.S.N. 443,660, filed November 22, 1982 which is incorporated herein by reference.

Other photoinitiators that can be used in the practice of this invention have the formula:

$$[(L^9)(L^{10})M^p]^{+q}Y_z$$

wherein

$M^p$ represents a metal selected from Cr, mo, W, Mn, Re, Fe, and Co;

$L^9$ represents 1 or 1 ligands contributing $\pi$-electrons that can be the same or different ligand selected

from substituted and unsubstituted $\eta^3$-allyl, $\eta^5$-cyclopentadienyl, and $\eta^7$-cycloheptatrienyl and $\eta^6$-aromatic compounds selected from $\eta^6$-benzene and substituted $\eta^6$-benzene compounds and compounds having 2 to 4 fused rings each capable of contributing 3 to 8 $\pi$-electrons to the valence shell of $M^p$;

$L^{10}$ represents none or 1 to 3 ligands contributing an even number of $\sigma$-electrons that can be the same or different ligand selected from carbon monoxide or nitrosonium;

with the proviso that the total electronic charge contributed to $M^p$ by $L^9$ and $L^{10}$ plus the ionic charge on metal $M^p$ results in a net residual positive charge of q to the complex, and

q is an integer having a value of 1 or 2, the residual electrical charge of the complex cations; Y is a halogen-containing complex anion selected from $AsF_6^-$
$SbF_6^-$ and $SbF_6^-$; and

z is an integer having a value of 1 or 2, the number of complex anions required to neutralize the charge q on the complex cation.

Examples of salts of organometallic complex cations useful in the composition of the invention include the following:

($\eta^5$-cyclopentadienyl)tricarbonyliron(1+) hexfluorophosphate
($\eta^5$-cylopentadienyl)carbonylbis(triphenylstibine)iron(1+) hexafluorophosphate
($\eta^5$-methylcyclopentadienyl)dicarbonylnitrososylmanganese(1+) hexafluoroantimonate
($\eta^5$)-cyclopentadienyl)tetracarcarbonylmolybdenum)1+) hexafluorophosphate
($\eta^5$-cyclopentadienyl)dicarbonylmethylisonitrileiron(1+) hexafluoroarsenate
bis($\eta^6$-benzene)chromium)1+) hexafluoroantimonate
bis($\eta^6$-hexamethylbenzene)cobalt(2+) hexafluoroantimonate
bis($\eta^6$-mesitylene iron(2+) bis(hexafluoroantimonate.

Other examples of salts or organometallic complex cations useful as the photoinitiator are listed and exemplified in the above-mentioned patent application U.S.S.N. 443,660.

The compositions of the invention containing such a photoinitiator generally are photosensitive only in the ultraviolet region of the electromagnetic spectrum. They can be sensitized to the near ultraviolet and visible range of the spectrum by using known sensitizers in accordance with teachings in U.S. Patent Nos. 3,729,313, 4,250,053, both of which are incorporated herein by reference. Examples of optical sensitizers include 2-(4-dimethylaminostyryl)quinoline, 4-dimethylaminostyryl phenyl ketone, pyrene, fluoroanthrene, p-terphenyl, and benzil, and 2-isopropyl thioxanthone (2-ITX).

Various adjuvants can also be added to the composition of the invention to alter the characteristics of the cured composition. Included among useful adjuvants are thixotropic agents such as ferric oxide, brick dust, and titanium oxide; fillers such as silica, magnesium sulfate, calcium sulfate, and beryllium aluminum silicate; clays such as bentonite; glass beads and bubbles; antioxidants such as Irganox™ 1010 (Ciba-Geigy); reinforcing material, e.g. unidirectional woven and nonwoven webs of organic and inorganic fibers including polyester, polyimide, glass fibers, polyamide fiber such as polyp-phenylene terephthalamide) (Kevlar™, E. I. duPont de Nemours and Co. Inc.), carbon fibers, and ceramic fibers. Amounts of up to about 50 parts of adjuvant per 100 parts of components a), b), c), and d) can be employed.

The compositions of the invention can be prepared in any manner known in the art. One method is simply to mix components a) and b) and then dissolve or disperse with agitation the viscosity controlling base polymer, component (c), into the mixture. Preferably the base polymer has been finely divided. Dissolution or dispersion can generally be accelerated by heating or using mechanical mixers, e.g., high speed mixers and paint mills. Component d), the initiator of cationic polymerization, can be added immediately or just prior to use, then mixed thoroughly.

Another method of preparing the compositions of the invention is to mix ethenylenically unsaturated monomers, which on polymerization form base polymer, into a blend of components a) and b). A free radical initiator is added to this mixture, which is then subjected to thermal or radiant energy to effect polymerization of the ethenically unsaturated monomers and form a syrup having a viscosity suitable for coating. On addition of component e), an initiator of cationic polymerization, the composition can be polymerized on exposure to thermal or radiant energy. The resulting material may have either high or low tack depending on the ratio of components a) and b).

Thermal free-radical initiators suitable for the process are those commonly used in the polymerization of ethenylically unsaturated monomers. Examples can be selected from the group comprising azo-bis-isobutyronitrile, benzoyl peroxide, di-tert-butyl peroxide, borotrialkyls and oxygen and persulfates. Photoinitiators, the preferred initiators of use in the compositions of the invention, are also well known.

Among the well-known photoinitiators of this type are the acyloin ethers (such as benzoin ethyl ether, benzoin isopropyl ether, anisoin ethyl ether and anisoin isopropyl ether), substituted acyloin ethers (such as alpha-hydroxymethyl benzoin ethyl ether), Michler's ketone (4,4'-tetramethyldiaminobenzophenone), and the

like. An especially preferred photoinitiator is 2,2-dimethoxy-1,2-diphenyl-1-ethanone (available as Irgacure™ 651 from Ciba-Geigy).

From about 0.05 to 5.0% of free radical initiator of polymerization based on total weight of components a), b), c), and d) can be used.

Polymerization of the compositions of the invention occurs on exposure of the composition to either thermal or radiant energy. Compositions containing a thermal initiator can be polymerized by heating at about 20°C to 50°C depending on the nature of the initiator and the particular monomers used. Generally heating from a few minutes to several hours is sufficient to effect polymerization.

Compositions containing a photoinitiator can be polymerized by exposure of the compositions to any source of radiation at a wavelength within the ultraviolet and visible spectral regions. Suitable sources of radiation include mercury, xenon, carbon arc and tungsten filament lamps, sunlight, etc. Exposures may be from less than about 1 second to 10 minutes or more depending upon such factors as the amounts and particular monomers and initiators being utilized, the radiation source and distance from the source, and thickness of the coating to be cured. The compositions may also be polymerized by irradiation with electron beam. Generally speaking the dosage necessary is from less than 1 megarad to 100 megarad or more. One of the major advantages with using electron beam polymerization is that highly pigmented compositions can be effectively cured at a faster rate than by exposure to actinic radiation.

The sensitivity of the polymerization of vinyl ethers to moisture is well known. It is preferable that polymerization be conducted in an atmosphere in which the humidity is controlled, preferably to less than about 20% relative humidity (RH). When the polymerization is carried out in atmospheres having a relative humidity greater than about 20%, the degree of polymerization of the vinyl ethers is reduced resulting in degradation in the physical characteristics of the coating. Much of this degradation can be overcome by increasing the amount of polyvinyl ether, component (b), in the composition by about 2 to 5 percent.

The iodonium and sulfonium photoinitiators useful in the compositions of the invention are photosensitive only in the ultraviolet. However, they can be sensitized to the near ultraviolet and the visible range of the spectrum by sensitizers for known photolyzable organic halogen compounds in accordance with the teachings of U.S. Pat. No. 3,729,313 which is incorporated herein by reference. Illustrative sensitizers are found in the following categories; aromatic amines, aminoketones, and colored aromatic polycyclic hydrocarbons. The use of basic amino compounds is avoided since such compounds tend to slow the polymerization of the organic material by reacting with the Lewis acid generated by the photoinitiator.

The following examples are given to illustrate the compositions of the invention and the processes for their preparation and use in coatings and materials having high and low tack. It is to be understood, however, that these examples are given only to illustrate and not limit the invention.

## TEST METHODS

### MEASUREMENTS OF 90° AND 180° PEEL ADHESION

[ASTM D 3330-78; PSTC-1 (11/75)]

Peel adhesion is the force required to remove a coated flexible sheet material from a test panel measured at a specific angle and rate of removal. In the examples, this force is expressed in Newtons per 100 mm (N/dm) width of coated sheet. The procedure followed is:

1) A 12.5 mm width of the coated sheet is applied to the horizontal surface of a clean test plate with at least 12.7 lineal cm in firm contact. A hard rubber roller is used to apply the strip.

2) For 90° peel adhesion measurements the free end of the coated strip is pulled from the glass plate at an angle of 90° using a tensile testing apparatus.

2A) For 180° peel adhesion measurements the free end of the coated strip is doubled back nearly touching itself so the angle of removal will be 180°. The free end is attached to the tensile testing apparatus.

3) The test plate is clamped in the jaws of a tensile testing machine which is capable of moving the plate away from the scale at a constant rate of 2.3 meters per minute.

4) The scale reading in Newtons is recorded as the tape is peeled from the glass surface. The data is reported as the range of number observed during the test.

### MEASUREMENT OF SHEAR STRENGTH

The shear strength is a measure of the cohesiveness or internal strength of an adhesive. It is based upon the amount of force required to pull an adhesive strip from a standard flat surface in a direction parallel to the

surface to which it has been affixed with a definite pressure. It is measured in terms of time (in minutes) required to pull a standard area of adhesive coated sheet material from a stainless steel test panel under stress of a constant, standard load.

The tests were conducted on adhesive coated strips applied to glass or a stainless steel panel such that a 12.5 mm by 12.5 portion of each strip was in firm contact with the panel with one end portion of the tape being free. The panel with coated strip attached was held in a rack such that the panel forms an angle of 178° with the extended tape free end which is then tensioned by application of a force of one kilogram applied as an angle weight from the free end of the coated strip. The 2° less than 180° is used to negate any peel forces thus insuring that only the shear forces are measured in an attempt to more accurately determine the holding power of the tape being tested. The time elapsed for each tape example to separate from the test panel is recorded as the shear strength.

## EXAMPLES

### Example 1

Into a glass jar was charged 135g of 2-ethylhexyl vinyl ether, 90g of cyclohexyl vinyl ether both ethers had been previously purified by passing down a column of 1/2 silica gel and 1/2 alumina, and 30g of a copolymer of 90% isooctyl acrtylate and 10% acrylic acid that had been copolymerized by conventional means. The jar was capped and rolled on a roller device for 72 hours at a temperature of about 22°C. During this time, the copolymer dissolved, forming a syrup. Into another glass jar was placed 14.6g of the syrup, 1.15 g of a polymerization initiator solution consisting of 0.500g of bis(4-dodecylphenyl)iodonium hexafluoroantimonate (C-12) and 0.025g of 2-isopropylthioxanthone (2-ITX) in 20g of dichloromethane (containing about 0.4% of cationic photoinitiator based on weight of syrup), and 0.156g of triethyleneglycol divinyl ether (TEGDVE). The jar with its contents was rolled for 10 minutes. The solution obtained was coated at 75 micrometer thickness onto primed polyester film and exposed to ultraviolet radiation having a wavelength principally in the range from about 3200A to 3800A for a dosage of about 450 millijoules. The coating was polymerized in an air atmosphere having a temperature of 40°C and a relative humidity of 10%. A pressure-sensitive adhesive coating was obtained that after 24 hours had a 180° peel adhesion from glass of 30 oz/0.5 in. (32.8 N/dm), and from bioriented polypropylene (BOPP) of 22 oz/0.5 in (24.1 N/dm). Shear times were 120 minutes for 25.4 xm x 12.7 cm samples under one kilogram load.

### Example 2

The procedure of Example 1 was repeated using 5.00 g of the vinyl ether-base polymer syrup, 0.353g of polymerization initiator solution consisting of 0.511g of C-12 and 0.025 of 2-ITX in 10g of dichloromethane (containing about 1.2% of photoinitiator based on syrup), and 0.152g of TEGDVE. The solution was coated and exposed to ultraviolet radiation as described in Example 1 in an air atmosphere at a temperature of about 27°C at a relative humidity of 13%. The pressure-sensitive adhesive coating obtained had, after 24 hours dwell at 180° Peel adhesion from glass 29.6 N/dm and from BOPP of 16.4 N/dm. Shear times were greater than 10,000 minutes for 25.4 cm x 12.7 cm samples under a one kilogram load.

### Example 3

A glass bottle was charged with:

| | |
|---|---|
| 29.7g | cyclohexyl vinyl ether |
| 39.5g | 2-ethylhexyl vinyl ether |
| 11.9g | isooctyl acrylate |
| 4.0 g | acrylic acid |
| 0.090g | Irgacure 651 |

The solution obtained was deoxygenated and placed under a pair of black lights for 30 minutes at 22°C. A syrup having 40% solids that consisted of copolymers of the acrylates and some of the vinyl ethers was obtained. To 10.0g of the syrup was added 0.414 of cationic initiator solution of 0.165g of triphenylsulfonium hexafluoroarsenate in 25.0g dichloromethane (0.27% initiator based on weight of syrup) and 1.6g diethyleneglycol divinyl ether (DEGDVE). The mixture was stirred vigorously and coated at 75 micrometer thickness onto polyethylene coated Kraft paper and onto polyethylene terephthalate film and each exposed at 18.3 meters/minute in a UV processor (PPG Industries Model QC 1202). After 24 hours of storage, each coated sample had 180° peel adhesion from glass of above about 35 n/dm and shear times of about 52 minutes for

12.7 cm x 12.7 cm samples under one kilogram load.

Example 4

Preparation of a low tack coating

A glass bottle was charged with:

6.50g cyclohexyl vinyl ether
1.10g isooctyl acrylate
0.40g acrylic acid
0.021g Irgacure 651

The solution obtained was deoxygenated and polymerized as described in Example 3. To the syrup obtained was added 0.5g of the cationic initiator solution used in Example 3 and the solution coated and cured as described there. A clear hard coating was obtained that adhered well to both polyester and polyethylene coated Kraft paper.

Example 5

This example illustrates compositions that give coatings having high tack. Following the procedure of Example 1, a syrup was prepared from 25g cyclohexyl vinyl ether (CHVE), 25g isooctyl vinyl ether (IOVE), 10g copolymer of 90% isooctyl acrylate-10% acrylic acid (IOA/AA 90/10) having a weight average molecular weight of 800,000 and 0.84 g TEGDVE. Then, as shown in Table I, there was placed into bottles an amount of syrup, additional IOVE and CHVE, and IS (a photoinitiator solution of 1g of C-12 and 0.05 gm of 2-ITX in 20.0 grams of dried dichloromethane) sufficient to form about six grams each of coating compositions containing respectively as shown in Table I, 27.7 to 52.3% CHVE, 60.4 to 35.8% IOVE, and about 11.0% IOA/AA, 1% TEGDVE, 0.3% of C-12 photoinitiator, and 150 ppm of 2-ITX.

After thorough mixing, the samples were coated onto bioriented polypropylene sheet at 75 mm thickness (wet) and cured by exposure in air to 425 millijoules per square centimeter (mJ/$cm^2$) of radiation under ultraviolet lamps at 29.4°C and a relative humidity of 13%. After allowing the coated sheets to age for 24 hours, samples of each radiation cured coatings were cut into strips 12.5 mm wide and the 180° peel adhesion measured at 30 cm/min from glass and from biaxially oriented polypropylene (BOPP). The shear strength under 1 kg load was also measured. The results are shown in Table I.

TABLE I

| Sample No | Percent of CHVE | Content of IOVE | Peel (N/dm) From Glass | From BOPP[a] | Shear Strength (min) |
|---|---|---|---|---|---|
| 1 | 52.3 | 35.8 | 12.0 | 5.5 | 964 PO[b] |
| 2 | 48.2 | 39.9 | 75.8 | 14.0 | 1910 |
| 3 | 43.7 | 43.9 | 74.9 | 25.4 | 209 |
| 4 | 39.8 | 48.3 | 72.5 | 38.5 | 109 |
| 5 | 36.0 | 52.1 | 68.8 | 37.9 | 101 |
| 6 | 31.8 | 56.2 | 62.8 | 28.2 | 39 |
| 7 | 27.7 | 60.4 | 50.6 | 27.8 | 12 |

a) Biaxially oriented polypropylene (BOPP)
b) Pop off failure

Table I clearly shows that the radiation cured compositions having about 11% viscosity controlling base (10A/AA), 1% polyvinyl ether (TEGDVE), 27.7 to 52.3% CHVE and 60.4 to 35.8% IOVE have excellent adhesive

properties. Excellent shear strengths are also realized at the higher CHVE concentrations.

Example 6

The procedure of Example 5 was repeated to prepare a series of radiation crosslinkable coatings containing respectively 55.5 to 88.8% IOVE, 33.2 to 0% CHVE, about 11% IOA/AA and 1% of TEGDVE. The coatings were radiation cured as described in Example 5. Peel adhesion was found respectively to be 57.8 N/dm to 2.8 N/dm, shear strength was 122 minutes to less than one minute.

Example 7

This example illustrates compositions having low tack. The procedure in Example 5 was repeated to prepare a series of radiation crosslinkable coating containing respectively 94 to 62% CHVE, 0 to 32% IOVE, about 5% polyisobutylene, 0.5% of TEGDVE and 0.1% of photoinitiator. The coatings were radiation cured as described in Example 5. These coatings were not adhesive. The samples that contained less than 9% IOVE were brittle. The coatings that contained more than 20% to IVOE were tough and flexible. The samples that contained from 10 to 20% IOVE were flexible but easily broken.

Example 8

This example illustrates the use of an organometallic photoinitiator. A mixture of 45.1g 2-ethylhexyl vinyl ether, 30.1g cyclohexyl vinyl ether and 10.0g of 90/10 IOA/AA as used in Example 5 in an amber bottle were rolled on a roller device until a homogeneous syrup was obtained. Then, 5.166g of this syrup was placed into an amber bottle and 0.394g of a solution of 63.6 mg of ($\eta^6$-mesitylene)($\eta^5$-cyclopentadienyl)(iron)($1^+$) hexafluoroantiomonate (structure I) in 0.642g butyrolactone added and the bottle rotated on a roller device. Since the mixture did not become homogeneous on rolling it was placed in a homogenator for a few minutes and coated immediately onto 100 µm at 75 µm thickness (wet) and cured as described in Example No. 5. A soft adhesive coated tape was obtained.

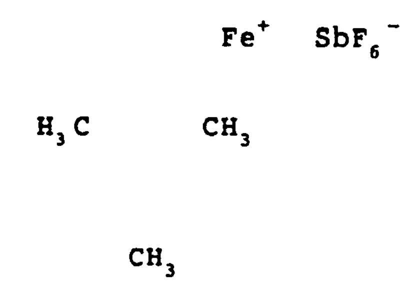

Structure I

Example 9

This example illustrates polymerization of the composition by electron beam. There was dissolved in 40.35g IOVE and 35.58 g CHVE, 10.17g of 90/10 IOA/AA as described in Example 5. To 12.83g of this solution in an amber bottle was added 0.91g of IS and 0.15g TEGDVE. The bottle was rotated until a solution was obtained and the syrup coated onto 100 µm polyester at 75 µm thickness and exposed to 10 megrarad of electron beam (225 KV) at a speed of 12.5 cm/sec under nitrogen (containing less than 100 ppm oxygen). 180° peel adhesion from glass was 24.5 N/dm and shear strength from glass was greater than 10,000 minutes at both 25°C and 70°C.

Example 10

This example illustrates preparation of a tough coating having low tack. A solution of 12.04g of poly(ethyl

methacrylate) (high molecular weight from Aldrich Chemical Co.) in 33.08g 2-ethylhexyl vinyl ether and 22.05g cyclohexyl vinyl ether was prepared. Into an amber bottle was placed 10.43g of the syrup and 0.755g of photoinitiator solution of 0.505g of (4-isooctyloxyphenyl)phenyliodonium hexafluoroantimonate, 50.2 mg of 2-isopropylthioxanthone, and 10.2 dried dichloromethane. The mixture was mixed on a rotator until homogeneous and then separated into two parts A and B. Into part A 58 mg of crosslinker TEGDVE was added. No crosslinker was added into B. The two samples were coated at a wet film thickness of 75 µm onto bioriented polypropylene in air at 37.8°C and 11% humidity and cured under ultraviolet as described in Example 5. Both cured coatings were clear, flexible and tough. Sample A was soluble in many common organic solvents while Sample B only swelled in these solvents.

Example 11

This example illustrates in situ preparation of the viscosity controlling base polymer. Three compositions were prepared to contain

| | 1 | 2 | 3 |
|---|---|---|---|
| Cyclohexyl vinyl ether | 34.1g | 34.4g | 18.9g |
| Isooctyl vinyl ether | 44.0g | - | - |
| n-Butyl vinyl ether | - | 44.6g | - |
| n-Decyl vinyl ether | - | - | 19.1g |
| Acrylic acid | 5.5g | 5.3g | 2.8g |
| Iso-octyl acrylate | 18.1g | 18.4g | 9.2g |
| Irganox 651 | 106 mg | 103 mg | 33 mg |

Each composition was deoxygenated by bubbling in nitrogen for 15 minues and then while being rotated were exposed to black light for two hours forming syrups having respectively 46.7%, 38.9%, and 41.7% solids. To the syrups were added TEGDVE and a 0.65% solution of triphenylsulfonium hexafluoroantimonate in methylene chloride to provide, respectively, 0.4%, 1.0%, and 0.0% TEGDVE and about 0.06% photoinitiator of cationic polymerization in each.

Each composition was coated onto bioriented polypropylene and cured as described in Example 3. Each cured coating was tacky and had peel adhesion from glass of greater than 60 N/dm and shear strengths of less than 100 min.

Example 12

Two syrups were prepared. Sample 1; a bottle was charged with 7.0g of poly isobornyl methacrylate (Aldrich), 9.0g of isooctyl vinyl ether and 6.0g of cyclohexyl vinyl ether. Sample 2; a second bottle was charged with 2.1g of polyethyl methacrylate, 6.0 of cyclohexyl vinyl ether and 9.0g of isooctyl vinyl ether. The two bottles were rolled until the polymer was completely dissolved. 1.4g of the photoinitiator solution of triphenylsulfonium hexafluoroantimonte described in the above example was added to both bottles. The samples were coated at 75 µm (wet), on BOPP and each coating cured as in the above example 3 gave a coating having a high gloss. Both coatings adhered well to the BOPP backing and did not crack upon bending.

Example 13

A syrup was prepared to contain 10.0g of a polymer of IOA/AA 90/10 having a number average molecular weight of 800,000, 40.0g isoctyl vinyl ether, and 35.2 g cyclohexyl vinyl ether. To 28.7g of this syrup in a bottle was added 0.4 g triethyleneglycol divinyl ether and the bottle rotated until a homogeneous solution was obtained. To each of about 4.0g portions A, B, C, D, E, F, and G of the syrup was added 1.0g of the tackifier listed in Table II and about 0.15g of a photoinitiator solution of 1.039g of [4-(2-ethylhexyl)phenyl]phenyliodonium hexafluoronatimonate and 0.05g of 2-ITX in 10.05g of spectral grade toluene and each mixed until homogeneous. Each portion then contained about 37% IOVE, 33% CHVE, 0.1% TEGDVE, 9.3% IOA/AA and 20% tackifier. Each portion was coated at 75 µm thickness onto 50 µm polyester and cured as described in Example 5. The 180° peel adhesion and shear strength of each coating is given in Table II.

TABLE II

| Portion | Tackifier | 90° Peel (Glass) (N/dm) | Shear (min) |
|---|---|---|---|
| A | Wingtac™ Extra | 38.2 | 323 |
| B | Foral™ 85 | 135 | 4 |
| C | Hercules "XPS 541" | 25.6 | 856 |
| D | Zonarez™ A115 | 145 | 13 |
| E | Piccolyte S115 | 23.4 | 51 |
| F | TBS | 42.0 | 1165 |
| G | None | 66.6 | 1580 |

Example 14

A syrup was prepared by dissolving 4.28g of IOA/AA 90/10 (as used in Example 5) in 25.26g IOVE. This syrup was separated into six portions A, B, C, D, E, and F, into each of which was added the vinyl ether monomer shown in Table III. These portions were agitated until homogeneous. Each of portions B-F were separated into two parts, 1 and 2, providing compositions A, B1, B2, C1, C2, ... F1, F2. Then as shown in Table III, to compositions B1, C1, D1, E1, and F1 was added TEGDVE in amounts sufficient to provide about 1.5 to 2.0% by weight of the crosslinker and into compositions A, B2, C2, D2, E2, and F2 was added TEGDVE in amounts sufficient to provide about 3.0 to 4.5% by weight of the crosslinker. To each of the compositions was added an amount of IS photoinitiator solution to provide in each composition a concentration of about 0.4% photoinitiator. Each composition was mixed until homogeneous and knife coated onto 75 µm BOPP at a thickness of 75 µm and cured as described in Example 5. For each coating 180° peel adhesion and shear strength were measured. Compositions containing 3 to 4.5 percent of crosslinker had shear strengths of greater than 10,000 minutes and compositions containing 1.5 to 2.0 percent of crosslinker had peel adhesions of 33.6 to 48.9 N/dm.

TABLE III

| Comp. No. | IOVE[a] % | 2nd Monomer | (%) | DVE[b] % | 10A/AA % | 90° Peel N/dm | Shear min. |
|---|---|---|---|---|---|---|---|
| A | 41.4 | EVOB[c] | (48.4) | 3.1 | 7.0 | 23.1 | >10,000 |
| B1 | 34.9 | EVOB | (57.5) | 1.6 | 5.9 | 79.9 | 48 |
| B2 | 34.5 | EVOB | (56.6) | 3.0 | 5.8 | 24.4 | >10,000 |
| C1 | 41.8 | DHEP[d] | (49.1) | 1.9 | 7.1 | 72.2 | 61 |
| C2 | 40.7 | DHEP | (47.9) | 4.5 | 6.8 | 35.7 | >10,000 |
| D1 | 34.5 | DHEP | (58.0) | 1.8 | 5.7 | 98.1 | 65 |
| D2 | 34.0 | DHEP | (57.0) | 3.3 | 5.6 | 83.0 | >10,000 |
| E1 | 45.5 | DHMP[e] | (46.0) | 2.0 | 6.5 | 66.6 | 36 |
| E2 | 44.8 | DHMP | (45.0) | 3.6 | 6.4 | 29.4 | >10,000 |
| F1 | 38.1 | DHMP | (54.7) | 1.7 | 5.5 | | 23 |
| F2 | 37.4 | DHMP | (54.0) | 3.0 | 5.5 | | >10,000 |

(a) isooctyl vinyl ether

(b) triethyleneglycol divinyl ether

(c) 2-(ethenyloxy)ethoxybenzene (Tg of homopolymer is 348°K) name not complete best CA name is 2-(ethenyloxy)ethoxybenzene

(d) 2,3-dihydro-3-ethoxy-2H-pyran(Tg of homopolymer is 334°K

(e) 2,3-dihydro-3-methoxy-2H-pyran(Tg of homopolymer is 335°K

Example 15

A syrup was prepared to contain 51.0% IOVE, 45.2% CHVE, 2.7% PIB, polyisobutylene having a molecular weight of about 5,000,000 available from Aldrich Chem. Co., and about 0.06% of photoinitiator, [4-(2-ethylhexoxy)phenyl]phenyliodonium hexafluoroantiomonate and 30 ppm 2-ITX. The syrup was divided into 5 portions into which various particular additives were stirred. Each was coated at 125 µm (wet) onto polyester film and cured as described in Example 5. Coatings A through D were transparent but coating E was opaque. The percent by weight of each additive and the peel adhesion and shear strength of each coating are given in Table IV.

TABLE IV

| Coating No. | Particulate Additive | % by Weight of Additive | 90° Peel N/dm Glass | 90° Peel N/dm BOPP | Shear min. |
|---|---|---|---|---|---|
| 12A | None | 0 | 208 | 212 | 145 |
| 12B | Aerosil™ 380 | 3.2 | --- | 160 | 10 |
| 12C | Miralite™ | 1.0 | 105 | 169 | 65 PO |
| 12D | Aerosil B-976 | 3.4 | 184 | 115 | 10 |
| 12E | Porous Polypropylene | 3.5 | 96.8 | 46.2 | 25 PO |

Example 16

This example illustrates curing of a composition using a thermally activated polymerization initiator. A syrup was prepared to contain 51.4% IOVE, 44.8% CHVE, 2.9% PIB, and 0.9% TEGDVE. to 5.6g of this syrup was added 0.16g of a initiator prepared as described below. The compositions were mixed until uniform and coated at a thickness of 75 µm onto 50 µm polyester. The coating was covered with a large glass dish and allowed to cure at 24°C for 30 minutes. A tacky coating was obtained. It had a 180° peel adhesion of 35.0 N/dm and a shear strength of 40 to 50 minutes.

The initiator was prepared by stirring for about 2-1/2 hours a suspension of 5.0g glass bubbles (available from the 3M Company) in 60g of a solution of 6.6g of aluminum sulfate and 2.3g of sulfuric acid in 91g deionized water. The bubbles were then filtered, washed with deionized water and dried for one hour at 170°C. Until used, it is stored in a desicaator. (The preparation of an aluminum hexahydrosulfate initiator for the polymerization of vinyl ethers is described in U.S. Patent 2,549,921.

Example 17

This example illustrates compositions providing thermoplastic coatings containing no crosslinking agent. An amber bottle was charged with 19.75g (18.2%) ELVAX 46L (a poly(ethylene-vinyl acetate) available from duPont), 47.28g (43.7%) 2-ethylphenyl vinyl ether and 41.23g (38.1%) cyclohexyl vinyl ether. The bottle was stoppered and shaken at about 22°C on a shaker until homogeneous. To the solution was added one ml of toluene containing 33.1 mg of [4-(2 ethylhexoxy) phenyl]- phenyliodonium hexafluoroantimonate initiator and 1.65 mg of 2-ITX. Shaking continued until the solution was again homogeneous. The syrup obtained was coated at 125 µm (wet) onto a polyethylene sheet and cured under a black light. A pressure sensitive adhesive coating was obtained that had a 90° peel from glass of 19.3 N/dm and from polypropylene of 15.8 N/dm. The coating had a shear time of greater than 10,000 min under a one kilogram load.

**Claims**

1. A coating composition comprising:
   a) a blend of
      1) at least one monovinyl ether monomer whose homopolymer has a $T_g$ of 300°K or lower; and
      2) at least one monovinyl ether mononer exclusive of endocyclic vinyl ethers whose homopolymer has a $T_g$ of 300°K or higher;
   b) optionally, at least one polyvinyl ether monomer,
   c) at least one viscosity controlling base polymer; and
   d) an initiator of cationic polymerization.

2. The coating composition of claim 1 comprising:
   a) about 100 parts of a blend of

1) from about 5 to about 70 percent of at least one monovinyl ether whose homopolymer has a $T_g$ of 300°K or lower, and

2) correspondingly, from about 95 to about 30 percent of at least one monovinyl ether monomers exclusive of endocyclic vinyl ethers whose homopolymer has a $T_g$ of 300°K or higher;

b) from 0 to about 40 parts of at least one polyvinylether monomer; and

c) from about 2 to about 80 parts of at least one viscosity controlling base polymer(s) that are soluble or dispersible in a) and b), and d) an initiator of cationic polymerization.

**3.** A pressure-sensitive adhesive composition comprising:

a) about 100 parts of a blend of:

1) from about 35 to about 70 percent of at least one monovinyl ether whose homopolymer has a $T_g$ of 300°K or lower, and

2) correspondingly, from about 65 to about 30 percent of at least one monovinyl ether, exclusive of endocyclic vinyl ethers whose homopolyners have a $T_g$ of 300°K or higher;

b) from 0 to about 40 parts of at least one polyvinyl ether;

c) from about 2 to about 80 parts of at least one viscosity controlling base polymer that is soluble or dispersible in a) and b); and

d) from about 0.2 to about 5 percent of a cationic polymerization initiator selected from the group consisting of photoinitiators and thermoinitiators.

**4.** The pressure-sensitive adhesive of claim 3 wherein the component monovinyl ether a)1) has a homopolyner having a $T_g$ of 265°K or lower.

**5.** The pressure-sensitive adhesive of claim 4 wherein the component monovinyl ether a)1) has a homopolyner having a $T_g$ of 250°K or lower.

**6.** The pressure-sensitive adhesive of claim 3 wherein the monovinyl ether component a)1) is selected from a group consisting of methoxyethene, ethoxyethene, and isooctyl vinyl ether.

**7.** The pressure-sensitive adhesive of claim 3 wherein the monovinyl ether component a)2) is selected from a group consisting of cyclohexylvinyl ether, and cycloheptylvinyl ether, cyclopentylvinyl ether, (4 methyl cyclohexyl)vinyl ether, (3 methylcyclohexyl)vinyl ether and (2 methylcyclohexyl)vinyl ether.

**8.** The pressure-sensitive adhesive of claim 3 wherein the ethylenically unsaturated monomer is selected from the group consisting of vinyl ethers, vinyl esters, acrylic esters, carboxylic acids, carboxylic anhydrides, olefins, and N-vinyl heterocyclics.

**9.** A process for making a pressure-sensitive adhesive comprising the steps of:

a) preparing a mixture of the composition of claim 1;

b) coating the composition onto a substrate, and

c) polymerizing the composition by exposure to actinic or thermal radiation or a combination thereof.

**10.** A process according to claim 14 wherein the polymerization is effected by exposure to ultraviolet radiation.

European Patent Office

# EUROPEAN SEARCH REPORT

Application Number EP 91301862.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP - B1 - 0 074 708 (KURARAY CO., LTD.) * Claims; page 24, lines 9-15 * | 1,2 | C 09 D 4/06<br>C 09 J 7/00 |
| A | US - A - 4 525 232 (ROONEY et al.) * Claims; examples * | 1,2 | |
| A | DE - C1 - 3 707 064 (TH. GOLDSCHMIDT AG) * Claims; examples * | 1 | |
| | | | TECHNICAL FIELDS SEARCHED (Int. Cl.5) |
| | | | C 09 D<br>C 09 J<br>C 08 L |

The present search report has been drawn up for all claims

| Place of search | Date of completion of the search | Examiner |
|---|---|---|
| VIENNA | 12-06-1991 | PAMMINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)